# EUROPEAN PATENT APPLICATION

(11) **EP 0 598 524 A1**
(43) Date of publication of application: **25.05.1994**
(21) Application number: 93308817.1
(22) Date of filing: 04.11.1993
(51) Int. Cl.: G11B 11/10

(54) **Magnetooptical recording medium**

(30) Priority: 19.11.1992 JP 310527/92
(71) Applicant: CANON KABUSHIKI KAISHA, Tokyo (JP)
(72) Inventor: Omata, Hiroshi, c/o Canon Kabushiki Kaisha, Ohta-ku, Tokyo (JP)
(74) Representative: Beresford, Keith Denis Lewis

(57) **Abstract**

A magnetooptical recording medium has at least two recording layers (3,4) formed on a substrate (1) and having mutually different Curie temperature. The recording layer (3) having the highest Curie temperature is formed with a thickness greater than 0.5 nm but not exceeding 5 nm. The recording medium having at least two recording layers, includes an exchange-coupled multi-layered film of rare earth-iron group alloys consisting of a first recording layer of a high Curie temperature and a small vertical magnetic anisotropy, and a second recording layer (4) of a Curie temperature lower than that of the first recording layer and a vertical magnetic anisotropy larger than that of the first recording layer.

## Description

### BACKGROUND OF THE INVENTION

### Field of the Invention

The present invention relates to a magneto-optical recording medium, and more particularly to a magnetooptical recording medium having two or more recording layers.

### Related Background Art

For signal recording on a magnetooptical recording medium, there are known the light modulation recording method in which a DC magnetic field is applied and the laser beam intensity is modulated according to the signal, and the magnetic field modulation recording method in which the laser beam irradiation is conducted with a constant intensity while the external magnetic field is inverted according to the signal. Recently the magnetic field modulation recording method is attracting attention since it is capable of overwriting and high-speed recording comparable to that in a hard disk, though the device configuration is relatively complex.

For achieving high-speed recording with the magnetic field modulation recording method, there is employed a high-frequency magnet capable of inverting the external magnetic field extremely rapidly, but it is very difficult to generate a strong external magnetic field with such high-speed magnet. Besides, the weaker the magnetic field becomes as the higher the speed is. For this reason the conventional magnetooptical recording medium developed for the light modulation recording method cannot provide sufficient record/reproducing characteristics in the magnetic field modulation recording method, in terms of the magnetic field sensitivity. Stated differently, for achieving high-speed recording with the magnetic field modulation recording method, a magnetooptical recording medium capable of providing satisfactory record/reproducing characteristics even with a weak external magnetic field is indispensable.

On the other hand, in recent magnetooptical recording media, in order to realize recording and reproduction with a high sensitivity and a high density, there is employed an exchange-coupled multi-layered film with separated functions, utilizing two or more recording layers having easy axis of magnetization perpendicular to the film plane, as disclosed in the Japanese Patent Laid-open Application No. 57-78652. Particularly the magnetooptical recording medium employing the exchange-coupled multi-layered film of rare earth-iron alloys enables recording and reproduction with a high speed, a high sensitivity and a high density.

### SUMMARY OF THE INVENTION

The object of the present invention is to provide a magnetooptical recording medium for the magnetic field modulation recording method, capable of providing satisfactory record/reproducing characteristics even with a weak externally applied magnetic field, and more particularly to provide an improvement in the record/reproduction characteristics of the magnetooptical recording medium having the exchange-coupled multi-layered film of rare earth-iron group alloys.

The above-mentioned object can be attained, according to the present invention, by a magnetooptical recording medium having two or more recording layers of mutually different Curie temperatures on a substrate, wherein the thickness of the recording layer of the highest Curie temperature is greater than 0.5 nm but does not exceed 5 nm.

Also according to the present invention, the two or more recording layers of mutually different Curie temperatures comprise an exchange-coupled multi-layered film of rare earth-iron alloys, consisting of a first recording layer of a higher Curie temperature and a smaller vertical magnetic anisotropy, and a second recording layer of a Curie temperature lower than that of said first recording layer and a vertical magnetic anisotropy larger than that of said first recording layer.

Furthermore, according to the present invention, there is provided a magnetooptical recording medium comprising, in succession on a substrate, a dielectric layer, a recording layer consisting of a rare earth-iron group alloy film, a recording layer consisting of a rare earth-iron alloy film of a Curie temperature lower than that in the first-mentioned recording layer, a dielectric layer and a reflective layer.

### BRIEF DESCRIPTION OF THE DRAWINGS

Fig. 1 is a schematic cross-sectional view of an embodiment of the magnetooptical recording medium of the present invention.
Fig. 2 is a chart showing the relationship among the externally applied magnetic field, carrier and noise signal outputs in the magnetic field modulation recording with a conventional magnetooptical recording medium;
Fig. 3 is a chart showing the relationship between the C/N ratio and the externally applied magnetic field in the magnetic field modulation recording/reproduction; and
Fig. 4 is a partially magnified view of the chart shown in Fig. 3.

### DETAILED DESCRIPTION OF THE PREFERRED EMBODIMENTS

A magnetooptical recording medium according to the present invention will be clarified in greater detail.

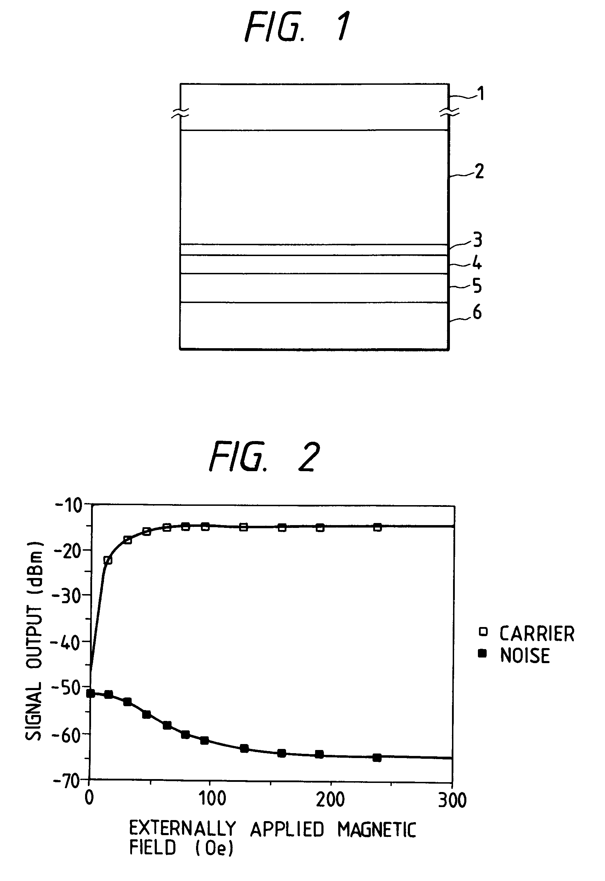

Fig. 2 is a chart showing the behavior of the carrier and the noise in the magnetic field modulation recording, in a conventional magnetooptical recording medium having an exchanged-coupled film of rare earth-iron group alloys, wherein the ordinate indicates the signal output while the abscissa indicates the externally applied magnetic field. In a weak magnetic field less than 1000 Oe, the carrier signal output reaches saturation but the noise level is still high, and the noise level reaches the bottom level after the magnetic field exceeds 2000 Oe. It is therefore possible to improve the C/N ratio or the record/ reproducing characteristics by reducing the noise level in a weak magnetic field where the carrier signal output reaches saturation level.

In the investigation of the recording mechanism in the magnetooptical recording medium having the exchange-coupled multi-layered film, the present inventor has found that, in a state of heating the recording layer of the highest Curie temperature to the vicinity of the Curie temperature and applying an external magnetic field modulated according to the information signal while radiating a laser beam of a certain intensity, the recording layer of the higher Curie temperature among two or more recording layers is subjected to inversion of magnetization by the externally applied magnetic field, and that thus inverted magnetization is transferred, in the course of cooling, by the exchange-coupling force, to an adjacent magnetic layer of the next higher Curie temperature. Thus the present invention achieves an improvement in the recording sensitivity in a weak magnetic field, by suppressing noise generation in the initial inversion of magnetization.

In the magnetooptical recording medium of the present invention, it is preferable that a recording layer of a relatively high Curie temperature, subjected to the initial inversion of magnetization, has a relatively low vertical magnetic anisotropy in order to facilitate the inversion of magnetization, and that a recording layer of a next higher Curie temperature, subjected to the next inversion of magnetization, has a relatively high vertical magnetic anisotropy. However, in order to facilitate the inversion of magnetization and to improve the magnetic field sensitivity, any of the recording layers constituting the exchange-coupled multi-layered film is composed of a material of a small vertical magnetic anisotropy, preferably a rare earth-iron group alloy, although these layers may mutually differ in the vertical magnetic anisotropy.

The vertical magnetic anisotropy means a property of stably maintaining the magnetization in the vertical direction, and a low vertical magnetic anisotropy means poor stability. Consequently a recording layer with a low vertical magnetic anisotropy shows maze magnetic domains, or is in so-called maze state, in the absence of the magnetic field or in a very weak magnetic field, and such state is the cause of noise generation. It is therefore necessary, for preventing noise generation, to reduce the static magnetic energy of the recording layer thereby relaxing the energy in the maze state in no or substantially no magnetic field, thus lowering the noise level.

In the conventional magnetooptical recording medium, the recording layers are formed with a total thickness of 20 to 30 nm for maintaining the stability of the recorded pits, but the present inventor has tried to reduce the thickness of the recording layer to be subjected to the initial inversion of magnetization, for the purpose of reducing the static magnetic energy, and have attained an evident result by forming, in a magnetooptical recording medium of a thickness of 20 to 30 nm, the recording layer of the high Curie temperature, subjected to the initial inversion of magnetization, with a thickness larger than 0.5 nm but not exceeding 5 nm.

In the following the present invention will be clarified further by examples.

### [Example 1]

A magnetooptical recording medium of the structure shown in Fig. 1 was prepared in the following manner.

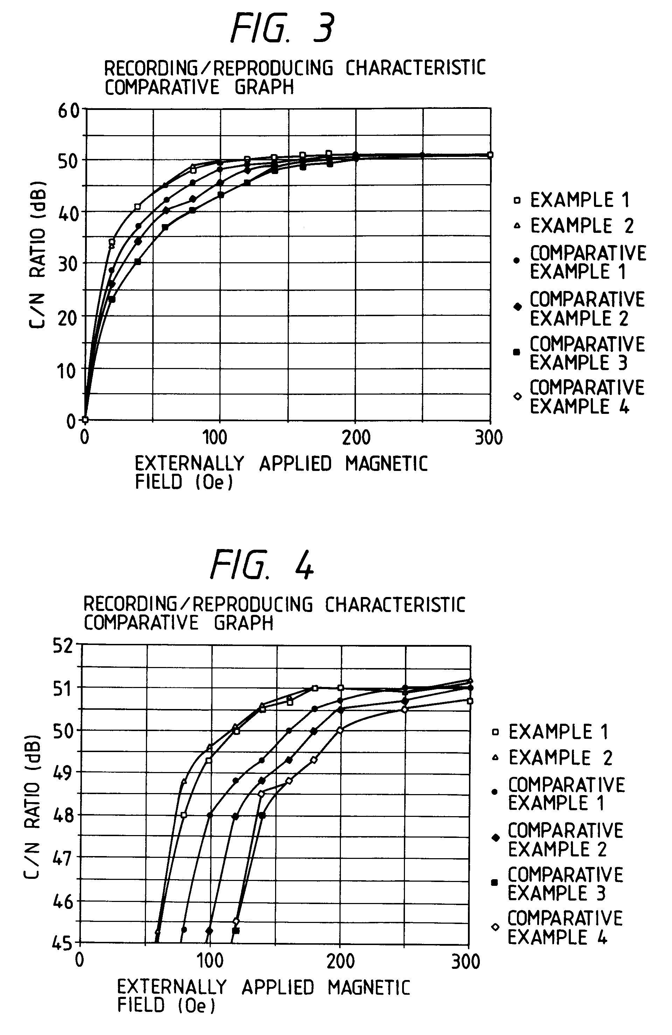

On a plastic substrate 1 of 130 mmφ, there were deposited in succession, by ordinary magnetron sputtering, a dielectric layer 2 of a silicon nitride film of a thickness of ca. 100 nm, a recording layer 3 of a higher Curie temperature composed of a GdFeCo film of a thickness of 5 nm having a Curie temperature of ca. 300°C, a recording layer 4 of a lower Curie temperature composed of a TbFeCo film of a thickness of 20 nm having a Curie temperature of ca. 170°C, a dielectric layer 5 of a silicon nitride film of a thickness of 30 nm, and a reflective layer 5 of an Al film of a thickness of ca. 50 nm to obtain a magnetooptical recording medium. The GdFeCo film was formed by simultaneous ternary sputtering employing three targets of Gd, Fe and Co, and the TbFeCo film was formed by simultaneous ternary sputtering employing three targets of Tb, Fe and Co. Said medium was subjected to signal recording and reproduction by the magnetic field modulation method, and the relationship between the C/N ratio and the externally applied magnetic field was measured. The obtained result is shown in Fig. 3 and Fig. 4 which is a partial magnified view of Fig. 3.

### [Example 2]

A magnetooptical recording medium was prepared in the same manner as in the example 1, except that the GdFeCo film of Curie temperature of ca. 300°C was formed with a thickness of 0.8 nm. Said medium was subjected to signal recording and reproduction by the magnetic field modulation method, and the relationship between the C/N ratio and the externally applied magnetic field was measured. The obtained result is shown in Figs. 3 and 4.

### [Comparative Example 1]

A magnetooptical recording medium was prepared in the same manner as in the example 1, except that the GdFeCo film of Curie temperature of ca. 300°C was formed with a thickness of 7 nm. Said medium was subjected to signal recording and reproduction by the magnetic field modulation method, and the relationship between the C/N ratio and the externally applied magnetic field was measured. The obtained result is shown in Figs. 3 and 4.

### [Comparative Example 2]

A magnetooptical recording medium was prepared in the same manner as in the example 1, except that the GdFeCo film of Curie temperature of ca. 300°C was formed with a thickness of 10 nm. Said medium was subjected to signal recording and reproduction by the magnetic field modulation method, and the relationship between the C/N ratio and the externally applied magnetic field was measured. The obtained result is shown in Figs. 3 and 4.

### [Comparative Example 3]

A magnetooptical recording medium was prepared in the same manner as in the example 1, except that the GdFeCo film of Curie temperature of ca. 300°C was formed with a thickness of 0.5 nm. Said medium was subjected to signal recording and reproduction by the magnetic field modulation method, and the relationship between the C/N ratio and the externally applied magnetic field was measured. The obtained result is shown in Figs. 3 and 4.

### [Comparative Example 4]

A magnetooptical recording medium was prepared in the same manner as in the example 1, except that the GdFeCo film of Curie temperature of ca. 300°C was not formed. Said medium was subjected to signal recording and reproduction by the magnetic field modulation method, and the relationship between the C/N ratio and the externally applied magnetic field was measured. The obtained result is shown in Figs. 3 and 4.

The signal recording and reproduction in the foregoing examples 1 and 2, and in the comparative examples 1 to 4 were conducted under the conditions of a linear speed of 9.0 m/sec., a recording frequency of 6.2 MHz, a recording laser power of 5.5 mW, a reproducing laser power of 1.0 mW, a numerical aperture (N.A.) of 0.55 in the optical head, and a laser wavelength of 780 nm.

Table 1 shows externally applied magnetic fields providing a record/reproducing C/N ratio of 49 dB, determined from the aforementioned results of measurements.

**Table 1**

| | Ext. Appld. Mag. Field (Oe) |
|---|---|
| Example 1 | 100 |
| Example 2 | 95 |
| Comp. Example 1 | 130 |
| Comp. Example 2 | 150 |
| Comp. Example 3 | 170 |
| Comp. Example 4 | 170 |

Results shown in Figs. 3 and 4 and Table 1 indicate that the magnetooptical recording media of the examples can provide a desired C/N ratio with smaller externally applied magnetic fields, in comparison with the media of the comparative examples. Stated differently, in the magnetooptical recording medium having the exchange-coupled multi-layered film, a higher C/N ratio or satisfactory record/reproducing characteristics can be obtained even under a weak external magnetic field, by the formation of the recording layer of the highest Curie temperature with a thickness greater than 0.5 nm but not exceeding 5nm.

## Claims

1. A magnetooptical recording medium having at least two recording layers of mutually different Curie temperatures on a substrate, wherein the recording layer of the highest Curie temperature is formed with a thickness greater than 0.5 nm but not exceeding 5 nm.

2. A magnetooptical recording medium according to claim 1, wherein said at least two recording layers of mutually different Curie temperatures include an exchange-coupled multi-layered film of rare earth-iron group alloys consisting of a first recording layer of a high Curie temperature and a small vertical magnetic anisotropy, and a second recording layer of a Curie temperature lower than that of said first recording layer and a vertical magnetic anisotropy larger than that of said first recording layer.

3. A magnetooptical recording medium according to claim 1 or 2, comprising, in succession on a substrate, a dielectric layer, a recording layer composed of a rare earth-iron group alloy film, a recording layer composed of a rare earth-iron group alloy with a Curie temperature lower than that of the first-mentioned recording layer, a dielectric layer, and a reflective layer.
